# EUROPEAN PATENT SPECIFICATION

(11) **EP 4 375 420 B1**
(45) Date of publication and mention of the grant of the patent: **08.04.2026**
(21) Application number: 22761258.7
(22) Date of filing: 20.07.2022
(51) Int. Cl.: E01D 15/24, B64F 1/305, G05B 23/02

(54) **REMOTE OPERATION SYSTEM FOR PASSENGER BOARDING BRIDGES FOR CRAFT AND ARRANGEMENT OF PASSENGER BOARDING BRIDGES FOR CRAFT**
FERNBETRIEBSSYSTEM FÜR FLUGGASTBRÜCKEN FÜR EIN FAHRZEUG UND ANORDNUNG VON FLUGGASTBRÜCKEN FÜR EIN FAHRZEUG
SYSTÈME DE CONDUITE À DISTANCE POUR PASSERELLES D'EMBARQUEMENT/DÉBARQUEMENT DE NAVIRES DE PASSAGERS ET DISPOSITIF DE PASSERELLES D'EMBARQUEMENT/DÉBARQUEMENT DE NAVIRES DE PASSAGERS

(30) Priority: 20.07.2021 ES 202130698
(43) Date of publication of application: 29.05.2024
(73) Proprietor: Adelte Airport Technologies, S.L., 08029 Barcelona (ES)
(72) Inventor: MARTÍN MOLINA, Javier, 08029 Barcelona (ES)
(74) Representative: Isern Patentes y Marcas S.L.
(86) International application number: PCT/ES2022/070474
(87) International publication number: WO 2023/002081

(56) References cited:
- ES-B1- 2 525 955
- US-A- 5 226 204
- US-A1- 2018 084 006

## Description

### OBJECT OF THE INVENTION

The object of this invention is to provide a remote operation system for passenger boarding bridges for craft, in air or port facilities, which incorporates notable innovations and advantages over the techniques used up to now.

More specifically, the invention proposes the development of a remote operation system for one or more passenger boarding bridges for craft, which enables operation and positioning of the bridge at a distance, without the need for the user controller to be physically present on the bridge itself, the possibility being provided of operating from one or more remote control points and providing greater functioning accuracy during the execution of operation manoeuvres.

### BACKGROUND OF THE INVENTION

Boarding bridges present in airports and ports, and used for passenger boarding or landing in airplanes or vessels, are well known in the current art.

It is therefore common to use passenger boarding bridges to facilitate the manoeuvres of boarding and landing passengers from passenger craft. The operation of connecting the passenger boarding bridge with an airplane, for example, is carried out by operators-controllers who operate the bridge by means of a control panel. This means that, to carry out this operation, an operator-controller with experience and training to carry out such a manoeuvre is required, since a collision could cause significant damage to the airplane or to the bridge.

In large airports with a large volume of air traffic, the number of operators-controllers with the ability to operate must be very high, since their presence is required both to connect and disconnect the bridge and the airplane.

However, the effective time required by an operator to carry out the manoeuvres is minimal, and most of their time is idle or waiting time, or time used to move from one position to another, or to remain in the bridge cabin waiting for the entry and subsequent parking of the aircraft, or awaiting in case of bridge failure until it is resolved, therefore not being able to attend other services.

To solve the above problem, document ES 2525955 is known, which describes a remote operation system for bridges that enables the operation and positioning of the bridge at a distance, without the need for the user controller to be physically on the bridge.

US5226204 A is another example of a telerobotic control apparatus for aligning the movable end of a motorized passenger loading bridge to the door in a vehicle enabling the loading and unloading of passengers and freight. The apparatus includes an improvement display and control system.

Although the previous systems comply satisfactorily, it has been observed that there are some aspects to be improved during the execution of operation manoeuvres, since remote management can give rise to errors due to the latency that can occur from the order given by the user-controller until the execution of the orders by the mechanical elements that are part of the bridge.

Furthermore, the applicant is currently unaware of an invention that has all the features described in this specification.

### DESCRIPTION OF THE INVENTION

The present invention has been developed with the aim of providing a remote operation system which is configured as a novelty within the field of application and solves the previously mentioned drawbacks, also contributing other additional advantages that will be obvious from the description below.

It is therefore an object of the present invention to provide a remote operation system for passenger boarding bridges for craft, the system comprising a passenger boarding bridge comprising movements elements and emergency stop means, a control unit comprising a correction circuit, data transmission means configured to communicate data, the system further comprising display means designed to display the environment of the bridge to a user-controller, image-capture means designed to capture the area around the bridge, interaction means allowing a user-controller to interact with the system designed such that the user-controller can introduce and/or alter operating parameters for the system, manual control means accessible to the user-controller of the system, and indicator means for indicating the operating situation of the bridge, such that all of them are linked in data communication by means of data transmission means with a control unit with the capacity to process such data, the control unit being able to control the movement elements of the bridge according to the data communication received from the manual control means.

In particular, the invention is characterised in that the control unit incorporates a correction circuit for latency management through software, establishing latency values in the signals generated from the interaction means to the movement elements of the bridge, such that in the event the control unit detects a value greater than the predetermined latency value, the control unit generates a signal that activates emergency stop means that are provided on the movement elements of the bridge.

Due to these features, the operation of the management and control of boarding bridges is improved by improving the accuracy of movements due to the arrangement of a system that allows latency to be controlled, reducing the risk of avoiding manoeuvres that could hit or damage the bridge. during the operations for approaching the craft (airplane or vessel) to be managed.

According to an optional aspect of the invention, the system includes detection means configured to detect the accurate position in space of a door of the aircraft to be treated, detecting the outer contour of the door, said detection means being linked through the control unit with an autonomous operation system.

Preferably, the detection means comprise at least one laser sensor located in the docking area of the bridge.

Preferably, the interaction means allowing a user-controller to interact with the system comprises a camera display screen and an auxiliary touch screen provided to manage auxiliary functions and/or configuration.

Advantageously, the data transmission means are wireless, thus reducing the number of components and simplifying the system.

In a preferred embodiment, these data transmission means are a Wi-Fi connection or through a 4G or 5G communication network.

In addition, the control unit comprises at least one microprocessor, further incorporating software designed for data processing and management.

It is another object of the present invention to provide an arrangement of passenger boarding bridges for craft, comprising a plurality of passenger boarding bridges for craft that are managed by means of an operation system described above.

Thus, the system described represents an innovative structure with structural and constituent features heretofore unknown for its intended purpose, reasons which, taken together with its usefulness, provide it with sufficient grounds for obtaining the requested exclusivity privilege.

Other features and advantages of the remote operation system object of the present invention will be evident in light of the description of a preferred, but not exclusive, embodiment which is illustrated by way of non-limiting example in the drawings which are attached, in which:

### BRIEF DESCRIPTION OF THE DRAWINGS

Figure 1 is a schematic view of the different elements involved in a preferred embodiment of the remote operation system of the present invention;

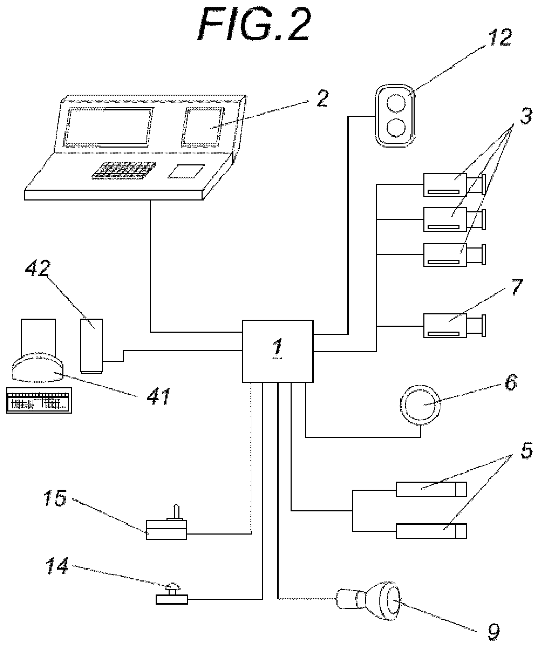

Figure 2 is a schematic view of the interaction between different elements involved in the invention and the passenger craft being an airplane;

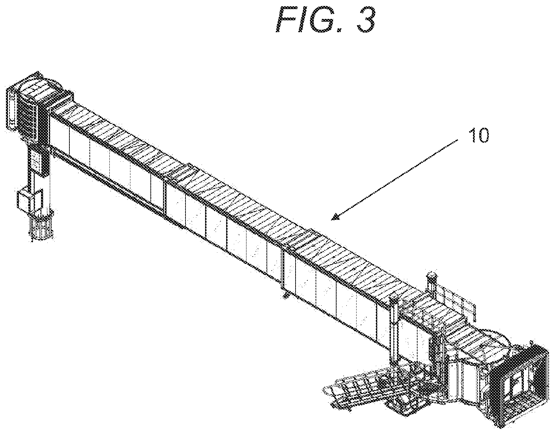

Figure 3 is a perspective view of a boarding bridge intended to function with the remote operation system of the invention;
Figure 4 is a schematic detail perspective view of a bridge used in the system according to the invention;

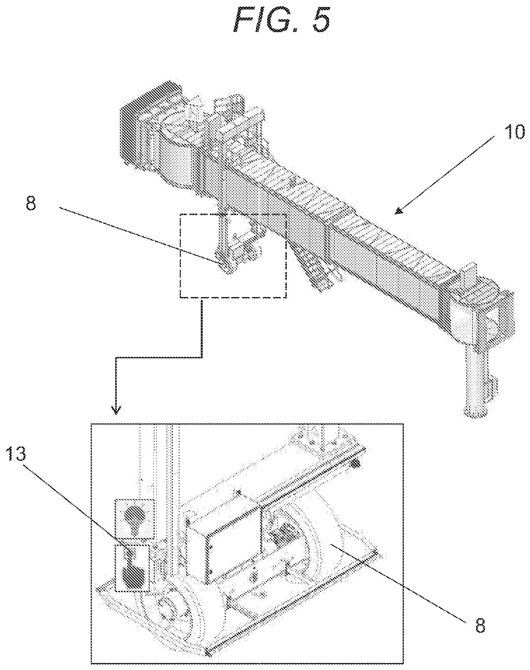

Figure 5 is a perspective view of a bridge with a detailed view of the area of the wheels; and
Figure 6 is a schematic view of the system according to the invention that can be applied to manage a plurality of boarding bridges through a single control unit.

### DESCRIPTION OF A PREFERRED EMBODIMENT

In light of the aforementioned figures, and in accordance with the adopted numbering, one may observe therein a preferred exemplary embodiment of the invention, which comprises the parts and elements indicated and described in detail below.

Furthermore, the terms first, second, third, and the like in the description and claims are used to distinguish between similar items and not necessarily to describe a sequential or chronological order. The terms may be interchanged in appropriate circumstances and embodiments of the invention may operate in other sequences than those described or illustrated herein.

Furthermore, the terms upper, lower, and the like in the description and claims are used for descriptive purposes and not necessarily to describe relative positions.

The remote operation system for passenger boarding bridges for craft, being applicable to airport or port facilities, comprises display means designed to display images to a user-controller; image-capture means designed to capture an area around the bridge (10), interaction means allowing a user-controller to interact with the system, designed such that the user/controller can introduce and/or alter operating parameters for the system; manual control means (15) accessible to the user/controller of the system; and indicator means for indicating the operating situation of the bridge (10), such that all of them are linked in data communication by means of data transmission means with a control unit (1) with the capacity to process such data, allowing the control unit (1) to control the movement elements (6) of the bridge (10) according to the data communication received from the manual control means (15).

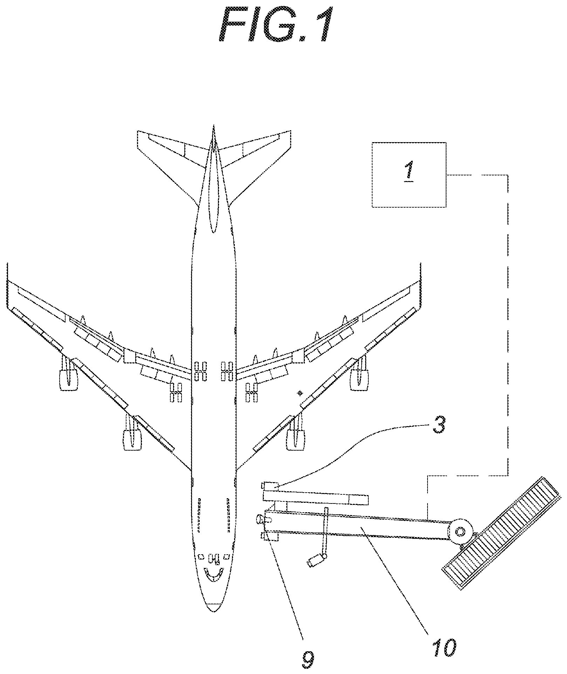

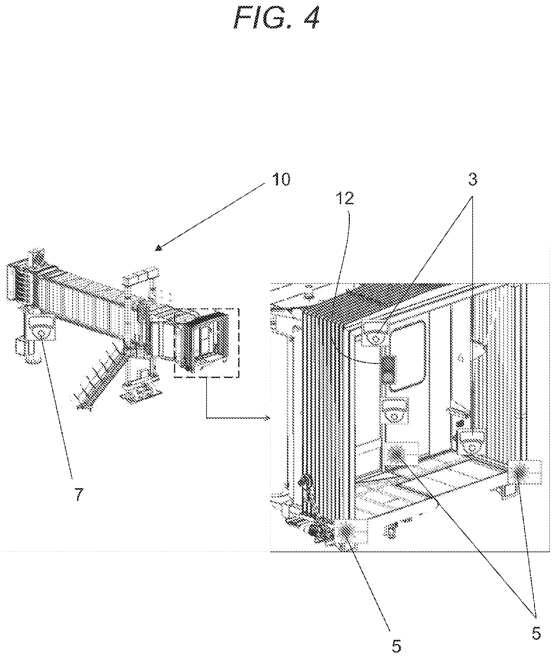

As shown schematically in Figure 1 for this preferred embodiment of the remote operation system for passenger boarding bridges for craft of the present invention, the display means comprises a plurality of monitors (2), and the image-capture means have a plurality of cameras (3), such that the cameras communicate the image-forming data to the control unit (1), which processes and transmits such data to the monitors (2) that carry out the display of the images that can be perceived by the user-controller. As shown in figure 4, cameras (3) are located at different locations or areas of the bridge, wherein a camera is provided in the zenithal docking area, a front docking camera, and a diagonal docking camera. In addition, an additional camera (7) is provided that focusses on the area of the wheel axle (8), which allows detecting possible obstacles in the trajectory area that could damage the wheels or cause an unwanted accident, as schematically shown in figure 4.

Furthermore, illumination means are provided, schematically indicated with the reference (9), which are linked to the control unit (1) intended to have adequate illumination of the area around the bridge (10).

The control unit (1) comprises at least one microprocessor, which incorporates software designed for processing and managing the data provided to allow the remote autonomous operation of one or multiple bridges.

In the area of the wheel axle (8) a button (13) is provided to be pressed by operator present in the airport runway area, which must be pressed when the airplane meets all the conditions so that the passenger boarding bridge can start the movement.

In any case, the operator-controller has sufficient visual information to adequately control the bridge (10).

The control unit (1) incorporates a correction circuit for latency management through software, establishing latency values in the signals generated from the interaction means to the movement elements (6) of the bridge (10), including the wheels (8), such that in the event that the control unit detects a value greater than the predetermined latency value, the control unit (1) generates a signal that activates emergency stop means that are provided on the movement elements of the bridge (10). These stop means have a mushroom-shaped button (14) easily accessible directly by the user-controller that will allow the emergency stop of the movement elements of the bridge (10) in the event of any eventuality that requires it.

The system includes detection means configured to detect the accurate position in space of a door of the aircraft to be treated, detecting the outer contour of the door, said detection means being linked through the control unit (1) with an autonomous operation system. When the operation of the bridge (10) is carried out by means of the autonomous operation mode, a system is activated that prevents it from being manually driven by a user-controller at the same time, thus avoiding the generation of duplicate orders or orders that may be contradictory.

Preferably, the detection means comprise a plurality of laser sensors (5) of a known type (for which reason their description will not go into greater detail), which are located in the docking area of the bridge, as represented in figure 4, so that they provide a series of advantages since they allow the accurate distance between the boarding bridge and the body of the airplane to be measured, or a reference point to be generated that allows the operator to know the precise coupling position between the aircraft door and the area for accessing the boarding bridge.

Additionally, indicator means linked to the control unit (1) are also provided to indicate access to the interior of the boarding bridge from the aircraft, which consist of a traffic light (12) with two different colours for indicating access to or prohibition from the interior of the bridge, for example, for the crew.

The interaction means allowing a user-controller to interact with the system comprise a touch screen (41), similar to an interface installed on a computer (42). Through them, the user-controller can interact with the operation of the system, introducing and/or altering different characteristic parameters of the functioning thereof, such as bridge (10) selection, password management, platform levelling, bellows control as well as other elements or systems provided for the local control of known passenger boarding bridges.

The data transmission means can be wireless, so that the number of components is reduced and the system is simplified, such as a Wi-Fi connection or through a 4G or 5G communication network or it can be through copper cable or optic fibre.

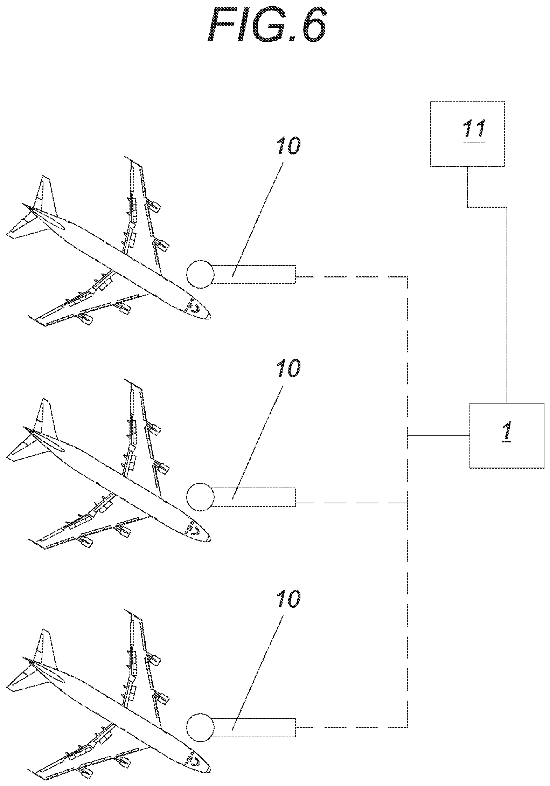

The control unit (1) can be connected to the operations database (11) of an airport (as shown in Figure 6) in order to facilitate and distribute the boarding bridges (10) in a more effective and predictable manner.

## Claims

1. A remote operation system for passenger boarding bridges (10) for craft, the system comprising:
a passenger boarding bridge (10) comprising movements elements (6) and emergency stop means;
a control unit (1);
data transmission means configured to communicate data;
the system further comprising display means configured to display the environment of the bridge to a user-controller, image-capture means provided to capture the area around the bridge (10), interaction means allowing a user-controller to interact with the system designed such that the user-controller allows to introduce and/or alter operating parameters for the system, manual control means (15) accessible to the user-controller of the system, and indicator means for indicating the operating situation of the bridge (10), such that all of them are linked in data communication by means of data transmission means with control unit (1) with the capacity to process such data, the control unit (1) being able to control the movement elements (6) of the bridge (10) according to the data communication received from the manual control means (15), **characterised in that** the control unit incorporates a correction circuit for latency management through a software, establishing latency values in the signals generated from the interaction means to the movement elements (6) of the bridge (10), such that in the event that the control unit (1) detects a value greater than the predetermined latency value, the control unit (1) generates a signal that activates emergency stop means that are provided on the movement elements (6) of the bridge (10).

2. The remote operation system for passenger boarding bridges (10) for craft according to claim 1, **characterised in that** it includes detection means configured to detect the accurate position in space of a door of an aircraft to be treated, detecting the outer contour of the door, said detection means being linked through the control unit (1) with an autonomous operation system.

3. The remote operation system for passenger boarding bridges (10) for craft according to claim 2, **characterised in that** the detection means comprise at least one laser sensor (5) located in a docking area of the bridge (10).

4. The remote operation system for passenger boarding bridges (10) for craft according to claim 1, **characterised in that** the interaction means allowing a user-controller to interact with the system comprise at least one camera display screen and an auxiliary touch screen (41) provided to manage auxiliary functions and/or configuration.

5. The remote operation system for passenger boarding bridges (10) for craft according to claim 1, **characterised in that** the data transmission means are wireless.

6. The remote operation system for passenger boarding bridges (10) for craft according to claim 1, **characterised in that** the data transmission means are a Wi-Fi connection or through a 4G or 5G communication network.

7. The remote operation system for passenger boarding bridges (10) for craft according to claim 1, **characterised in that** the control unit (1) comprises at least one microprocessor.

8. The remote operation system for passenger boarding bridges (10) for craft according to claim 1, **characterised in that** the control unit (1) incorporates software provided to data process and management.

9. The remote operation system for passenger boarding bridges (10) for craft according to claim 1, **characterised in that** the craft is an airplane.

10. The remote operation system for passenger boarding bridges (10) for craft according to claim 1, **characterised in that** the craft is a vessel.

11. The remote operation system for passenger boarding bridges (10) for craft according to claim 1, **characterised in that** it includes indicator means for access to an interior of the boarding bridge (10) from an aircraft, said indicator means being linked with the control unit (1).

12. The remote operation system for passenger boarding bridges (10) for craft according to claim 11, **characterised in that** the indicator means consist of lighting means (9) with different colours for indicating access or prohibition.

13. The remote operation system for passenger boarding bridges (10) for craft according to claim 1, **characterised in that** the emergency stop means have a mushroom-shaped button (14) accessible by the user-controller.

14. An arrangement of passenger boarding bridges for craft, comprising a plurality of passenger boarding bridges (10) for craft that are managed by means of a remote operation system according to any of claims 1 to 13.

## Patentansprüche

1. Fernbetriebssystem für Fluggastbrücken (10) für Fahrzeuge, wobei das System Folgendes umfasst:
eine Fluggastbrücke (10) umfassend Bewegungselemente (6) und Notstoppmittel;
eine Steuereinheit (1);
Datenübertragungsmittel, die dazu konfiguriert sind, Daten zu kommunizieren;
wobei das System ferner Anzeigemittel, die dazu konfiguriert sind, die Umgebung der Brücke einem Benutzer-Controller anzuzeigen, Bildaufnahmemittel, die bereitgestellt sind, um den Bereich um die Brücke (10) herum aufzunehmen, Interaktionsmittel, die es einem Benutzer-Controller ermöglichen, mit dem System zu interagieren, das so ausgelegt ist, dass der Benutzer-Controller es ermöglicht, Betriebsparameter für das System einzugeben und/oder zu ändern, manuelle Steuermittel (15), auf die der Benutzer-Controller des Systems zugreifen kann, und Angabemittel zum Angeben des Betriebszustands der Brücke (10) umfasst, so dass alle über Datenübertragungsmittel mit einer Steuereinheit (1) in Datenkommunikation verbunden sind, die in der Lage ist, solche Daten zu verarbeiten, wobei die Steuereinheit (1) die Bewegungselemente (6) der Brücke (10) gemäß der von den manuellen Steuermitteln (15) empfangenen Datenkommunikation steuern kann, **dadurch gekennzeichnet, dass** die Steuereinheit eine Korrekturschaltung für das Latenzmanagement durch eine Software beinhaltet, wobei Latenzwerte in den Signalen ermittelt werden, die von den Interaktionsmitteln zu den Bewegungselementen (6) der Brücke (10) generiert werden, so dass die Steuereinheit (1) für den Fall, dass die Steuereinheit (1) einen Wert erkennt, der größer ist als der vorbestimmte Latenzwert, ein Signal generiert, das Notstoppmittel aktiviert, die an den Bewegungselementen (6) der Brücke (10) bereitgestellt sind.

2. Fernbetriebssystem für Fluggastbrücken (10) für Fahrzeuge nach Anspruch 1, **dadurch gekennzeichnet, dass** es Erkennungsmittel enthält, die dazu konfiguriert sind, die genaue Position einer Tür eines zu behandelnden Luftfahrzeugs im Raum zu erkennen, indem die Außenkontur der Tür erkannt wird, wobei die Erkennungsmittel über die Steuereinheit (1) mit einem autonomen Betriebssystem verbunden sind.

3. Fernbetriebssystem für Fluggastbrücken (10) für Fahrzeuge nach Anspruch 2, **dadurch gekennzeichnet, dass** die Erkennungsmittel mindestens einen Lasersensor (5) umfassen, der sich in einem Andockbereich der Brücke (10) befindet.

4. Fernbetriebssystem für Fluggastbrücken (10) für Fahrzeuge nach Anspruch 1, **dadurch gekennzeichnet, dass** die Interaktionsmittel, die es einer Benutzer-Steuerung ermöglichen, mit dem System zu interagieren, mindestens einen Kameraanzeigebildschirm und einen zusätzlichen Touchscreen (41) umfassen, der bereitgestellt wird, um Zusatzfunktionen und/oder die Konfiguration zu managen.

5. Fernbetriebssystem für Fluggastbrücken (10) für Fahrzeuge nach Anspruch 1, **dadurch gekennzeichnet, dass** die Datenübertragungsmittel drahtlos sind.

6. Fernbetriebssystem für Fluggastbrücken (10) für Fahrzeuge nach Anspruch 1, **dadurch gekennzeichnet, dass** die Datenübertragungsmittel eine Wi-Fi-Verbindung oder eine Verbindung über ein 4G- oder 5G-Kommunikationsnetzwerk sind.

7. Fernbetriebssystem für Fluggastbrücken (10) für Fahrzeuge nach Anspruch 1, **dadurch gekennzeichnet, dass** die Steuereinheit (1) mindestens einen Mikroprozessor umfasst.

8. Fernbetriebssystem für Fluggastbrücken (10) für Fahrzeuge nach Anspruch 1, **dadurch gekennzeichnet, dass** die Steuereinheit (1) Software beinhaltet, die dazu bereitgestellt wird, Daten zu verarbeiten und zu managen.

9. Fernbetriebssystem für Fluggastbrücken (10) für Fahrzeuge nach Anspruch 1, **dadurch gekennzeichnet, dass** das Fahrzeug ein Flugzeug ist.

10. Fernbetriebssystem für Fluggastbrücken (10) für Fahrzeuge nach Anspruch 1, **dadurch gekennzeichnet, dass** das Fahrzeug ein Schiff ist.

11. Fernbetriebssystem für Fluggastbrücken (10) für Fahrzeuge nach Anspruch 1, **dadurch gekennzeichnet, dass** es Angabemittel für den Zugang zum Inneren der Fluggastbrücke (10) von einem Luftfahrzeug aus enthält, wobei die Angabemittel mit der Steuereinheit (1) verbunden sind.

12. Fernbetriebssystem für Fluggastbrücken (10) für Fahrzeuge nach Anspruch 11, **dadurch gekennzeichnet, dass** die Angabemittel aus Beleuchtungsmitteln (9) mit unterschiedlichen Farben zum Angeben von Zugang oder Verbot bestehen.

13. Fernbetriebssystem für Fluggastbrücken (10) für Fahrzeuge nach Anspruch 1, **dadurch gekennzeichnet, dass** die Notstoppmittel einen pilzförmigen Knopf (14) aufweisen, der für den Benutzer-Controller zugänglich ist.

14. Anordnung von Fluggastbrücken für Fahrzeuge, umfassend eine Vielzahl von Fluggastbrücken (10) für Fahrzeuge, die mittels eines Fernbetriebssystems nach einem der Ansprüche 1 bis 13 gemanagt werden.

## Revendications

1. Système d'actionnement à distance pour des passerelles d'embarquement de passagers (10) pour embarcation, le système comprenant :
une passerelle d'embarquement de passagers (10) comprenant des éléments de mouvement (6) et des moyens d'arrêt d'urgence ;
une unité de commande (1) ;
des moyens de transmission de données configurés pour communiquer des données ;
le système comprenant en outre des moyens d'affichage configurés pour afficher l'environnement de la passerelle à un dispositif de commande d'utilisateur, des moyens de capture d'image fournis pour capturer la zone autour de la passerelle (10), des moyens d'interaction permettant à un dispositif de commande d'utilisateur d'interagir avec le système conçu de telle sorte que le dispositif de commande d'utilisateur permet d'introduire et/ou d'altérer des paramètres d'actionnement pour le système, des moyens de commande manuelle (15) accessibles au dispositif de commande d'utilisateur du système, et des moyens indicateurs pour indiquer la situation d'actionnement de la passerelle (10), de telle sorte qu'ils soient toutes reliés en communication de données par le biais de moyens de transmission de données à l'unité de commande (1) avec la capacité de traiter de telles données, l'unité de commande (1) étant apte à commander les éléments de mouvement (6) de la passerelle (10) selon la communication de données reçue des moyens de commande manuelle (15), **caractérisé en ce que** l'unité de commande incorpore un circuit de correction pour la gestion de latence à travers un logiciel, établissant des valeurs de latence dans les signaux générés par les moyens d'interaction vers les éléments de mouvement (6) de la passerelle (10), de telle sorte que dans le cas où l'unité de commande (1) détecte une valeur supérieure à la valeur de latence prédéterminée, l'unité de commande (1) génère un signal qui active des moyens d'arrêt d'urgence qui sont fournis sur les éléments de mouvement (6) de la passerelle (10).

2. Système d'actionnement à distance pour des passerelles d'embarquement de passagers (10) pour embarcation selon la revendication 1, **caractérisé en ce qu'**il comporte des moyens de détection configurés pour détecter la position précise dans l'espace d'une porte d'un aéronef à traiter, détectant le contour externe de la porte, lesdits moyens de détection étant reliés à travers l'unité de commande (1) avec un système d'actionnement autonome.

3. Système d'actionnement à distance pour des passerelles d'embarquement de passagers (10) pour embarcation selon la revendication 2, **caractérisé en ce que** les moyens de détection comprennent au moins un capteur laser (5) situé dans une zone d'accostage de la passerelle (10).

4. Système d'actionnement à distance pour des passerelles d'embarquement de passagers (10) pour embarcation selon la revendication 1, **caractérisé en ce que** les moyens d'interaction permettant à un dispositif de commande d'utilisateur d'interagir avec le système comprennent au moins un écran d'affichage de caméra et un écran tactile auxiliaire (41) fourni pour gérer des fonctions auxiliaires et/ou une configuration.

5. Système d'actionnement à distance pour des passerelles d'embarquement de passagers (10) pour embarcation selon la revendication 1, **caractérisé en ce que** les moyens de transmission des données sont sans fil.

6. Système d'actionnement à distance pour des passerelles d'embarquement de passagers (10) pour embarcation selon la revendication 1, **caractérisé en ce que** les moyens de transmission des données sont une connexion Wi-Fi ou un réseau de communication 4G ou 5G.

7. Système d'actionnement à distance pour des passerelles d'embarquement de passagers (10) pour embarcation selon la revendication 1, **caractérisé en ce que** l'unité de commande (1) comprend au moins un microprocesseur.

8. Système d'actionnement à distance pour des passerelles d'embarquement de passagers (10) pour embarcation selon la revendication 1, **caractérisé en ce que** l'unité de commande (1) incorpore un logiciel fourni pour un traitement et une gestion de données.

9. Système d'actionnement à distance pour des passerelles d'embarquement de passagers (10) pour embarcation selon la revendication 1, **caractérisé en ce que** l'embarcation est un avion.

10. Système d'actionnement à distance pour des passerelles d'embarquement de passagers (10) pour embarcation selon la revendication 1, **caractérisé en ce que** l'embarcation est un navire.

11. Système d'actionnement à distance pour des passerelles d'embarquement de passagers (10) pour embarcation selon la revendication 1, **caractérisé en ce qu'**il comporte des moyens indicateurs pour un accès à un intérieur de la passerelle d'embarquement (10) à partir d'un aéronef, lesdits moyens indicateurs étant reliés avec l'unité de commande (1).

12. Système d'actionnement à distance pour des passerelles d'embarquement de passagers (10) pour embarcation selon la revendication 11, **caractérisé en ce que** les moyens indicateurs consistent en des moyens d'éclairage (9) de différentes couleurs pour indiquer un accès ou une interdiction.

13. Système d'actionnement à distance pour des passerelles d'embarquement de passagers (10) pour embarcation selon la revendication 1, **caractérisé en ce que** les moyens d'arrêt d'urgence ont un bouton en forme de champignon (14) accessible par le dispositif de commande d'utilisateur.

14. Agencement de passerelles d'embarquement de passagers pour embarcation, comprenant une pluralité de passerelles d'embarquement de passagers (10) pour embarcation qui sont gérées par le biais d'un système d'actionnement à distance selon l'une quelconque des revendications 1 à 13.
